# EUROPEAN PATENT APPLICATION

(11) **EP 1 672 642 A1**
(43) Date of publication of application: **21.06.2006**
(21) Application number: 04030144.2
(22) Date of filing: 20.12.2004
(51) Int. Cl.: G11B 33/14, B60R 11/02, H05K 7/20

(54) **Electronic built-in system**

(71) Applicant: Harman Becker Automotive Systems GmbH, 76307 Karlsbad (DE)
(72) Inventor: Noisternig, René, 75334 Conweiler (DE); Rieger, Robby, 76307 Karlsbad (DE)
(74) Representative: Bertsch, Florian Oliver

(57) **Abstract**

Electronic built-in system for installation in a support structure mounted in a passenger compartment of a vehicle, the system comprising: at least one electronic module (330-350), a housing (100) for receiving said at least one electronic module, the housing (100) being mounted to the support structure of the vehicle comprises a front control panel (110) with operating elements for operating the electronic system, the front control panel (110) facing the passenger compartment, a cooling unit (370) provided in the housing which is guiding cooling air through the housing for cooling said at least one electronic module, at least one first opening (140) provided in a outer wall portion of the housing (100) for supplying cooling air to the housing, at least one second opening (380) provided in an outer wall portion of the housing for removing the cooling air from the housing, wherein said at least first and said at least second openings (140, 380) are arranged at different wall portions of the housing (100), the different wall portions being separated from the passenger compartment by the support structure when the built in system is installed in the support structure.

## Description

This invention relates to an electronic built-in system for installation in a support structure and to a navigation system comprising such an electronic built-in system. The invention relates especially to an electronic built-in system mounted to a console or a dash board in a passenger compartment of a vehicle.

### Related Art

In recent years, the use of a multimedia system in a vehicle has become more and more common. These multimedia systems which are normally controlled by one central head unit normally comprise different electronic modules for the different multimedia systems. These electronic systems often comprise a navigation module for calculating a route from an originating location to a destination location in a geographic region. Furthermore, an audio module may be provided which allows the driver of the vehicle to hear music or radio plays provided on a compact disc or a DVD which is insertable into the multimedia system. Furthermore, a radio receiver may be provided to receive different radio programs. Additionally, the use of telecommunication modules has become more common in these systems. A cellular phone is incorporated into the electronic system. These electronic systems are normally built into a support structure of the passenger compartment of the vehicle, be it the centre console of the vehicle or the dash board. Normally, the space behind the centre console of the dash board is limited, as many different control units and features, such as the ventilation system of the vehicle are all comprised behind the centre console or the dash board.

These electronic systems normally further comprise a display which can be used for guiding the user to the destination location by showing map data or by showing the driving direction.

It is preferred that all the different electronic modules are incorporated into one housing needing little space behind the support structure in which the electronic built-in system is incorporated.

Due to the fact that the multiple electronic modules are arranged in a very compact way, the heat generation of the different modules has become a factor to be dealt with. The different electronic modules generate heat which has to be dissipated. Accordingly, there exists a need to provide an electronic built-in system which can be cooled effectively. Furthermore, some electronic components generate more heat than others. Accordingly, a further need exists to provide an electronic built-in system in which the electronic modules are arranged in such a way that the electronic modules generating most of the heat can be cooled down in an effective way.

### Summary of the invention

This need is met by an electronic built-in system as mentioned in the independent claims. In the dependent claims preferred embodiments of the invention are described.

According to a first embodiment of the invention the electronic built-in system for installation in a support structure mounted in a passenger compartment of the vehicle comprises at least one electronic module. Furthermore, a housing for receiving said at least one electronic module is provided, the housing being mounted to the support structure of the vehicle comprises a front control panel with operating elements for operating the electronic system, the front panel facing the passenger compartment. The housing is accommodated in the support structure, and the front panel can be controlled by the driver from the passenger compartment. Furthermore, a cooling unit is provided in the housing which is guiding cooling air through the housing for cooling said at least one electronic module. The cooling unit helps to dissipate the heat generated by said one or more electronic modules. Furthermore, at least one first opening is provided in an outer wall portion of the housing for supplying cooling air to the housing. At least one second opening is provided in an outer wall portion of the housing for removing the cooling air from the housing. The first opening working as air inlet and the second opening working as air outlet help to guide the cooling air through the housing. Additionally, said at least first and said at least second opening are arranged at different wall portions of the housing, the different wall portions being separated from the passenger compartment by the support structure. Due to this last feature several effects can be achieved. First of all the supplied cooling air is decoupled from the air originating from the second openings. The use of the heated air coming out of the housing as new air supplied to the housing as cooling air is prevented due to the fact that the first and the second openings are arranged on different wall portions of the housing. A second benefit lies in the fact that the first openings and the second openings are provided in the space behind the support structure which is not separated from the passenger compartment. If the first opening for supplying cooling air to the housing was provided on a front wall portion or front control panel the supplied cooling air would be part of the air of the passenger compartment. Any particles, dust or smoke in the air of the passenger compartment would be guided through the housing. When the air of the passenger compartment is guided through the housing the deposition of dust or smoke could deteriorate the functioning of the different electronic modules provided in the housing. In the electronic system of the invention the openings for supplying the cooling air and for removing the cooling air are arranged on wall portions not facing the passenger compartment. Due to the fact that most of the cooling air is not coming from the passenger compartment, but from the space behind the support structure or console of the vehicle the deposition of dust inside the housing can be minimized. It should be understood that the rest of the housing is not hermetically sealed or airtight as there are other openings or recesses provided in the housing through which air can enter the housing. By way of example, the electronic built-in system normally comprises a slit for introducing a storage medium such as a compact disk in the front control panel. The supply of air through this slit cannot be completely prevented, but with the first openings and the second openings for supplying and for removing the air, a large percentage of the cooling air which is guided through the housing will enter the housing through the first openings. The smallest resistance for the supplied air will be achieved when the supplying air enters the housing through the first openings.

According to another embodiment of the invention, the first and the second openings are arranged at opposite wall portions of the housing. When the openings are arranged at opposite wall portions the cooling air entering the housing through the first openings will pass through the whole housing before leaving the housing, so that the cooling air is guided through a large part of the housing.

Preferably, the first and the second openings are arranged on respective sidewalls of the housing. In this case, the cooling air passes through the whole width of the housing. It is furthermore preferred that the first and the second openings are arranged on the lower portions of the respective sidewalls of the housing. With this arrangement the supplying of cooling air to the lower part of the housing can be achieved. The lower part of the housing is ventilated. When designing the arrangement of the different electronic modules in the housing this airflow can be considered so that electronic modules generating a large amount of heat will preferably be arranged in the lower part of the housing.

According to another embodiment of the invention the cooling unit comprises a ventilator situated next to the second openings for removing the cooling air. The ventilator helps to create the airflow through the housing. The ventilator blows the air out of the second openings. As a consequence, the cooling air leaving the housing will cause fresh air to penetrate the housing. This cooling air will mainly enter the housing through the first openings provided in another sidewall of the housing and will be guided through the whole housing and will leave the housing through the second openings. When different electronic modules are arranged in a close relationship within the housing a ventilator is necessary for cooling the different modules.

According to one embodiment of the invention, the electronic built-in system comprises at least one of a radio module, an audio module, a navigation module, a telecommunication module or a storage medium reading module. The storage medium reading module is able to read data from a removable storage medium inserted into the electronic built-in system. According to a preferred embodiment of the invention the radio module, the audio module, the navigation module or the telecommunication module are arranged in the lower part of the housing, whereas the storage medium reading medium is arranged in the upper part of the housing. The radio module and the audio module comprising a power amplifier, the navigation module and/or the telecommunication module generate a large amount of heat during use, so that these modules have to be cooled by the cooling air. The storage medium reading module normally comprising a laser unit for reading the data out of the storage medium does not generate as much heat as the other modules. Furthermore, the cooling air passing through the housing can still comprise objects (small dust particles) which could impede the proper functioning of the reading of the storage medium. This is why the storage medium reading module is preferably arranged in the upper part of the housing, whereas the other heat generating modules are arranged in the lower part of the housing where the openings are provided for air supply and air outlet. The cooling air will predominantly be guided along the electronic modules situated in the lower part of the housing, so that the cooling air will not be guided along the storage medium reading module. This helps to guarantee the proper functioning of the reading cycle of the storage medium reading module.

Preferably, the cooling unit further comprises cooling fins which are mainly provided for cooling the power amplifier of the electronic built-in system which generates most of the heat. The cooling fins, which are physically connected to the power amplifier, dissipate the generated heat. The large surface of the cooling fins helps to effectively dissipate the generated heat. The air supplied by the ventilator will pass through the cooling fins, and will exit the housing through the second openings. Preferably, the cooling fins are arranged between the wall portion comprising the second openings and the ventilator. When the cooling fins are arranged downstream of the ventilator, the ventilator will not be damaged or the ventilator itself will not be deteriorated by the hot air, which may dissipate from the cooling fins. This hot air is directly guided through the second openings to the outside of the housing.

The need for effectively cooling the electronic built-in system and for guaranteeing a proper functioning of the different modules is also achieved by an electronic built-in system of a vehicle which comprises a housing for receiving several electronic modules, the modules comprising heat generating modules and at least an optical read module for reading out data from a removable storage medium. The electronic built-in system further comprises a cooling unit for guiding cooling air through the housing for cooling the electronic modules. Additionally, first openings are provided in an outer wall portion of the housing for supplying cooling air to the housing. Additionally, second openings are provided in an outer wall portion of the housing for removing the cooling air from the housing. According to one aspect of the invention, the first and the second openings are arranged at the housing in such a position that the cooling air on its way from the first openings to the second openings is predominantly guided along the heat generating modules. A large amount of the cooling air should be guided along the heat generating modules and not along the optical read module. The optical read module normally comprises a reading unit for reading the data from the storage medium. The cooling air could deteriorate the proper functioning of the reading unit as small particles comprised in the cooling air could be deposited on the reading unit and could, as a consequence, prevent a proper functioning of the reading unit.

As already mentioned above, the first and the second openings are preferably arranged on opposite wall portions of the housing, especially the two openings are arranged at lower parts of the side surfaces of the housing.

As the first and the second openings are arranged in the lower parts of the sidewalls the cooling air will predominantly be guided along the lower part of the housing. To this end, the heat generating modules are arranged inside the housing in the lower part of the housing, whereas the optical read module is arranged in an upper part of the housing.

Preferably, the electronic built-in system further comprises a mounting unit for receiving a hard disk in the electronic built-in system. When the electronic system comprises a navigation module the geographic data including information about the road network and comprising additional information such as speed limits, address ranges along the road portions, turn restrictions and intersections of roads, direction restrictions, and so on may be stored on a hard disk. This hard disk has to be additionally arranged within the housing.

Preferably, the mounting unit for receiving the hard disk is arranged also in the lower part of the housing where most of the cooling air is guided through. The hard disk is fixedly installed in the mounting unit, so that the reading unit for reading data out of the hard disk can be protected more effectively against dust as it is the case with a reading unit provided in an optical read module for reading data from a removable storage medium.

According to another embodiment of the invention, the electronic built-in system comprises a detachable front control panel. With the front control panel being detached the hard disk can be mounted to the mounting unit or can be removed. Preferably, the front control panel can be detached in a way that a car dealer or car manufacturer can install the mounting unit for receiving the hard disk or can insert the hard disk in case of a refitting of a hard disk after installation of the electronic built-in system in the vehicle.

Furthermore, a mother printed circuit board or main board may be provided in the housing which is arranged at the bottom of the housing and which is therefore arranged in the lower part of the housing where most of the cooling air is passing through. The motherboard normally comprises many different electronic components which also generate heat so that the mother printed circuit board should be cooled in the same way as the other heat generating modules.

Preferably, the housing is a 2-DIN housing fitting in a 2-DIN recess of the support structure. The DIN standard is a standard which is used in vehicles for describing the space needed to accommodate an electronic built-in system such as a radio or navigation system. When the electronic built-in system comprises a navigation module a larger display may be used than in 1-DIN systems. In this case, a 2-DIN system may be used so that additional space is provided for the display and for the control buttons for controlling the different electronic modules of the system.

### Brief description of the drawings

Specific embodiments of the invention will now be described by way of example with respect to the accompanying drawings, in which
- Fig. 1: is a perspective front view of an electronic built-in system to be installed in a vehicle;
- Fig. 2: shows a perspective rear view of the system of Fig. 1;
- Fig. 3: shows the arrangement of different electronic components and the cooling system of the electronic system with the housing being shown in phantom view;
- Fig. 4: shows a sectional perspective view of the electronic system;
- Fig. 5: shows the arrangement of the electronic modules of the electronic modules of the system in a perspective rear view; and
- Fig. 6: shows the electronic system with a detached front control panel for introducing a hard disk.

### Detailed description of the preferred embodiments

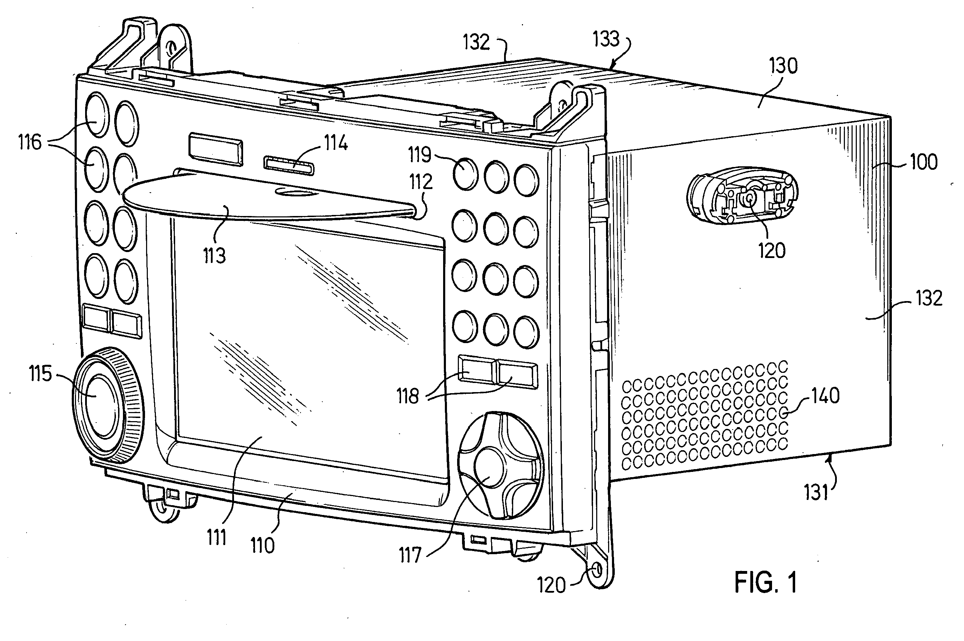

In Fig. 1 an electronic system comprising different electronic modules is shown. The electronic system comprises a housing 100. The electronic system is installed in an accommodating structure or support structure (not shown) in a passenger compartment of a vehicle. The driver can only see a front control panel 110 comprising different operating elements for controlling the electronic system. In the example shown, the front control panel 110 comprises a display 111 displaying information about the operating mode of the system. The large display is especially useful, when the electronic system is working in a navigation operating mode, in which the driver of the vehicle is guided to a predetermined destination location. On the display 111 map data showing the different streets or showing any other driving related information can be displayed. When the system is working in a radio or audio operating mode, the display can show the name of the radio station and the received frequency or the track of an audio compact disk or a DVD. Above the display, a slot 112 is provided in the front panel in which a storing medium such as a compact disk or a DVD 113 can be inserted. A second slot 114 may be provided in which a memory card such as an SD card can be introduced. On the lower left side of the front control panel a turn press button 115 is provided which may be used to control the volume and which may be used to turn the system on or off. The control buttons 116 may be used to enable the different operating modes of the electronic system. Each button 116 may be used to enable a different operating mode, e. g., one button 116 may be used to switch to the radio mode, another button may be used to switch to the navigation mode, etc.

On the lower right side of the control panel a rocker 117 may be provided for controlling the different operating modes, e. g., for chosing an address in the navigation mode, etc. Above the rocker 117 two forward and backward buttons 118 can be provided which may, for example, be used for scanning the frequency band in a radio operating mode or which may be used as skip buttons in an audio mode to move from one title to another. In the upper right corner several buttons 119 are shown, which can predominantly be used in a telecommunication operating mode. These buttons 119 can be used for dialling a telephone number.

It should be understood that the operating elements could be arranged in a complete different way, and that also other operating elements could be used. The different ways of arranging operating elements on a front control panel is well-known in the art, so that a detailed description thereof can be omitted.

Furthermore, fixing elements 120 fixing the electronic built-in system to a console (not shown) of the vehicle are provided. The electronic system is arranged in such a way, that the front control panel is accessible to the driver or to other passengers in the passenger compartment of the vehicle, the rest of the housing being hidden behind the support structure supporting the housing.

The housing comprises an upper wall 130, a bottom wall 131, two sidewalls 132 and a back wall 133. As can be seen in Fig. 1 the sidewall 132 comprises in its lower part several first openings 140. As will be explained later on, these first openings 140 are provided for supplying cooling air for the electronic modules installed inside the housing. The first openings 140 act as air inlet of the system.

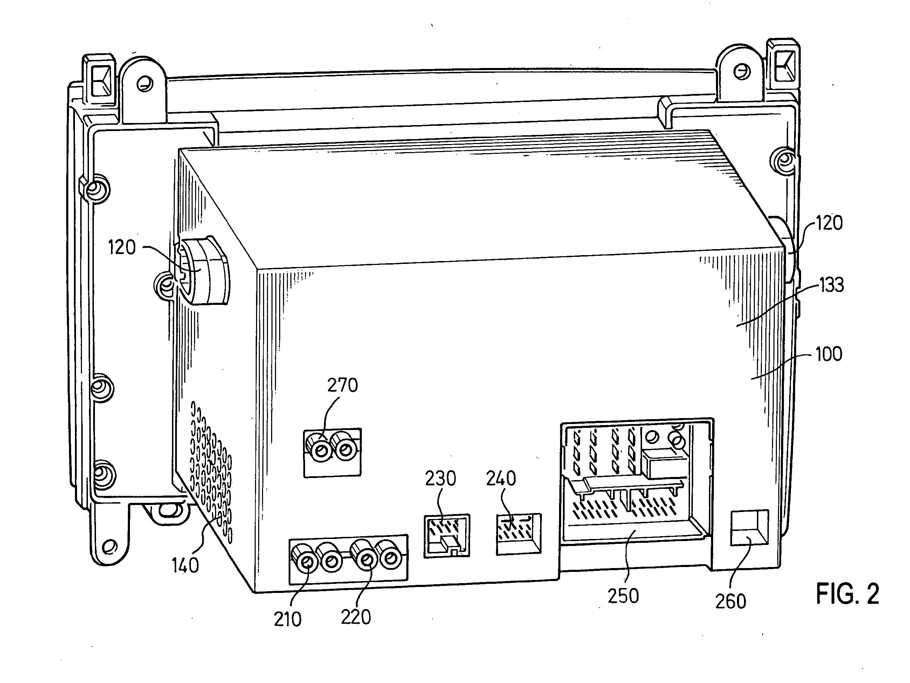

The first openings 140 are also shown in Fig. 2 where the housing 100 is shown in a perspective rear view. As can be seen in Fig. 2 the back wall 133 comprises several recesses, so that different connectors are accessible. In the lower left part of the back wall 133 a connector pair 210 is provided, which may be used for receiving a GPS signal or a bluetooth signal, e. g., from a telecommunication unit such as a cellular phone. Next to the connectors 210 two connectors 220 are shown which may receive signals from a wireless LAN network, or may receive video signals from a rear camera provided for controlling the space behind the vehicle. A connector 230 may be provided to exchange data with a rear seat entertainment system allowing the passengers in the back to use another entertainment program. The connector 240 may be used to exchange data with a television tuner, if provided in the vehicle. The connecting system 250 may be used to exchange data with an optical bus system provided in the vehicle where all the relevant driving data are provided for processing. Additionally, an USB interface 260 may be provided. Furthermore, a connector unit 270 may be provided for transmitting a radio signal received by an antenna of the vehicle. As can be seen from Fig. 2 all the connectors are arranged in the lower part of the housing 100. As will be explained later on, this is due to the fact, that all the electronic modules or electronic circuit boards comprising the connectors are arranged in the lower part of the housing.

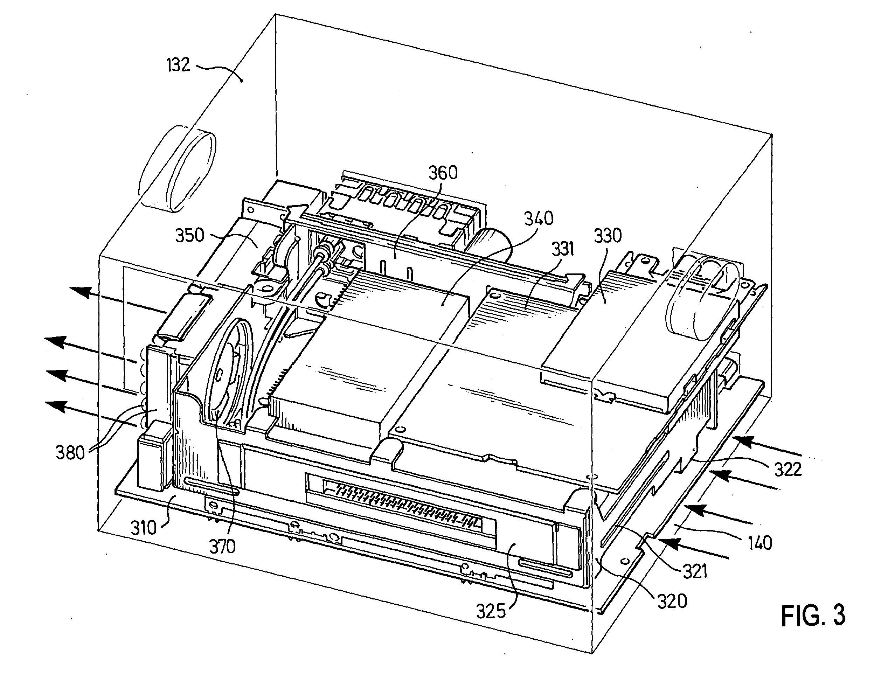

In Fig. 3 a front perspective view of the electronic system is shown, whereas the housing 100 is shown in phantom lines, the front control panel 110 being omitted for the sake of clarity. At the bottom of the housing a mother printed circuit board or main board 310 is provided. On the main board 310 a mounting structure or mounting unit 320 is placed, in which a hard disk 325 is installed. On the side surface of the mounting unit 320 a connecting segment 321 connects the front portion of the mounting unit to the back portion where a mounting peg 322 for mounting the mounting unit to the main board is provided. The connecting segment 324 is smaller in width than the front and the rear part of the mounting unit. As will be explained later on, this helps the cooling air to pass above and below the mounting unit 320.

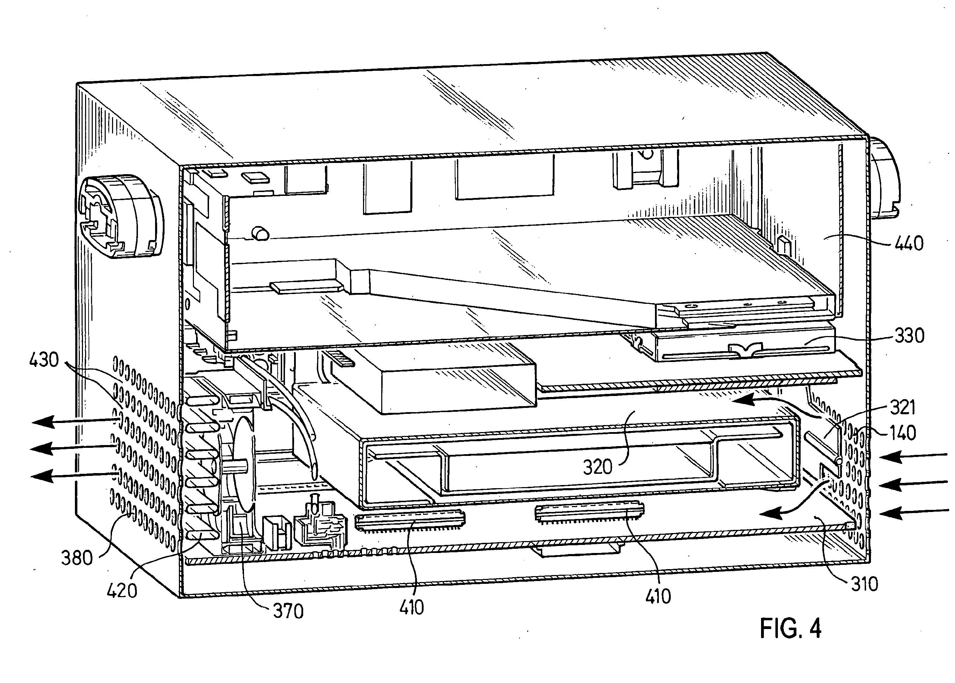

On top of the mounting unit 320 with the hard disk 325 a tuner module 330 with a tuner board 331 is installed. Next to the tuner module 330 another extension module 340 may be provided comprising any other electronic module. Next to the sidewall 132 the power amplifier 350 may be installed in the rear part of the housing. Additionally, a connector board 360 is provided to which the connectors shown in Fig. 2 are connected. Near the lower part of the sidewall a that cooling air will flow off from the housing through second openings 380 provided in the sidewall opposite to the sidewall where the first openings 140 are provided. As also can be seen in Fig. 4 the ventilator will move the air supplied from the first openings 140 through the lower part of the housing, the cooling air being removed through the second openings 380 provided in the opposite sidewall. All the electronic components which generate heat and which, therefore, have to be cooled are situated in the lower part of the housing. In this lower part of the housing most of the cooling air is flowing from openings 140 to openings 380.

One great advantage of the arrangement shown is that the intake air is coming from a space behind the support structure. Most of the air will not come through openings which may be provided in the front control panel. This can help to avoid to introduce dust or smoke or other small particles into the housing where they could deteriorate the functioning of the different electronic modules. Furthermore, the intake air is completely separated from the air outlet, so that the heated cooling air leaving the second openings 380 is not used as fresh air entering the housing through the first openings 140.

In Fig. 4 a sectional view of the housing is shown. The cooling air supplied to the housing will enter the housing through the openings 140. The connecting segment 321 of the mounting unit 320 will divide the airflow in an upper part and a lower part. The airflow in the upper part will cool the upper surface of the mounting unit 320 and the hard disk installed therein, together with the tuner board 330 and other possible electronic modules accommodated above the mounting unit which are however, still accommodated in the lower part of the housing.

Another part of the supplied air will be deflected downwards, will pass along the main board 310, will be able to cool different electronic components 410 provided on the main board, before leaving the housing through the second openings 380. As can be seen in Fig. 4 cooling fins 420 are arranged between the sidewall and the ventilator 370. The cooling fins 420 help to dissipate the heat generated by the power amplifier (not shown) which is installed in the rear part next to the left sidewall as can be seen in Fig. 3. The power amplifier is the electronic module generating a large amount of the heat. The cooling fins have to dissipate this heat. As can be seen in Fig. 4 the cooling fins are arranged in such a way that the different fins are arranged in such a way, that the openings 380 are arranged between two fins. As a consequence, the cooling air pushed through the second openings 380 by the ventilator 370 is guided along the cooling fins and can easily exit through the second openings 380. The arrangement of the cooling fins, which are at the same height as the connecting portion 430 between the second openings 380 help to effectively remove the cooling air from the housing.

In the upper part of the housing the optical read module for reading the data from the compact disk 113 shown in Fig. 1 is arranged. This reader of the storage medium can accommodate one storage medium or multiple storage mediums, such as a CD exchanger, comprising up to six compact disks by way of example. As can be seen in Fig. 4 the optical read module is comprised in a casing 440. From the arrangement of the first and the second openings and from the arrangement of the different electronic modules, it can be seen that the optical read module will be influenced by the cooling air flowing in the lower part of the housing to a very low extent. This helps to avoid that particles comprised in the cooling air will impede the proper functioning of the reading module.

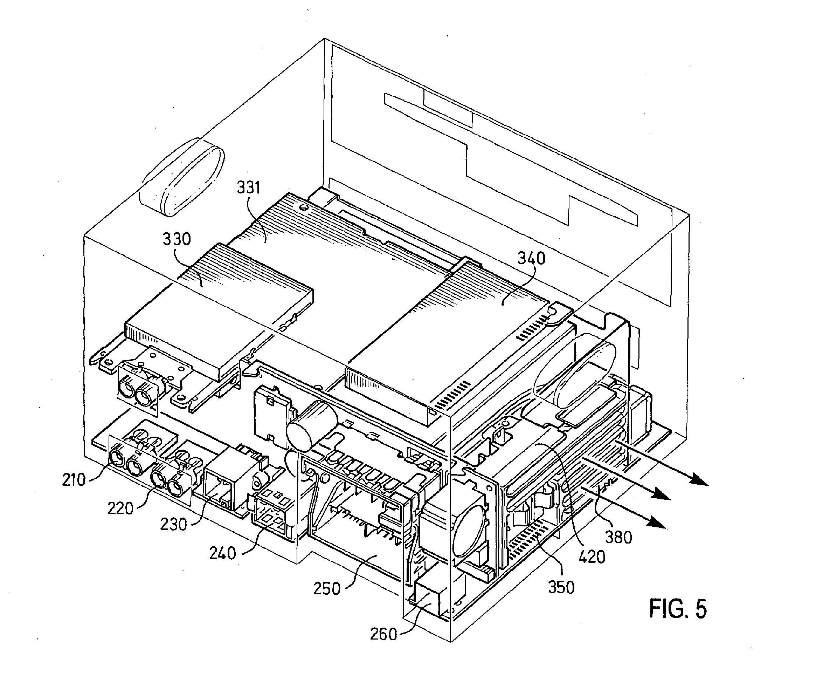

In Fig. 5 a rear elevation view of the different electronic modules inside the housing can be seen. The power amplifier 350 is arranged next to the sidewall comprising the second openings 380, so that the heat generated by the power amplifier 350 can directly exit the housing through the second openings 380. On top of the amplifier cooling fins 420 are provided which help to dissipate the heat generated by the power amplifier. Furthermore, the different electronic modules 330, 340, and the connector board 360 with the different connectors are also shown in detail.

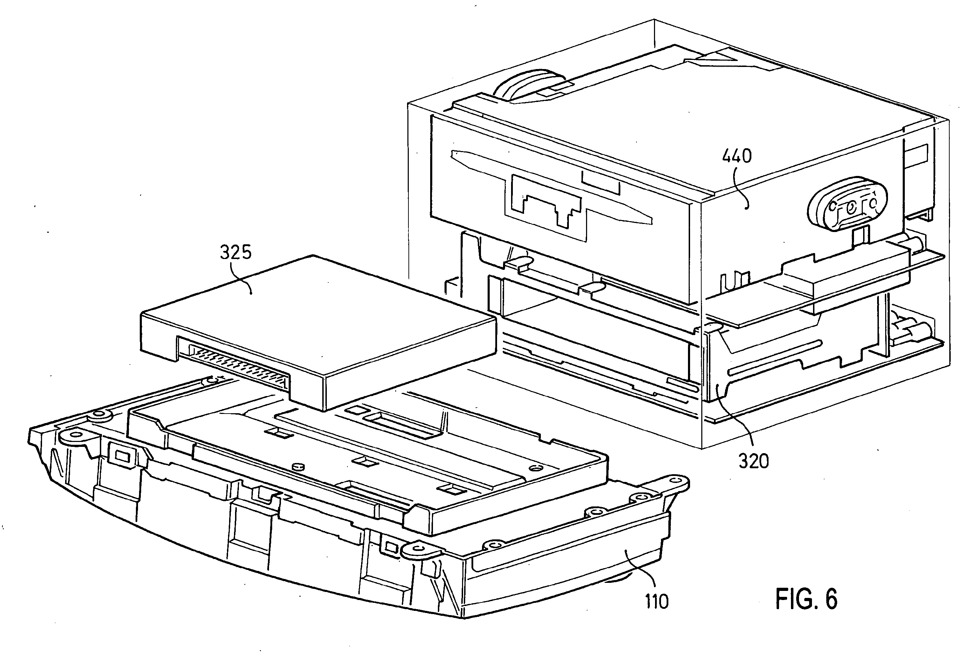

In Fig. 6 the front control panel 110 is shown detached from the housing 100. In the upper part of the housing the casing 440 is shown for accommodating the optical read module for reading the storage medium inserted to the slot 112 or through the slot 114. For storing data, especially map data for the navigation module the hard disk 325 can be inserted into the mounting unit 320. The hard disk does not need to be comprised in the system when the electronic build-in system is installed in a vehicle. However, it is possible to add the hard disk 325 later on. To this end, the front control panel 110 is detachably arranged on the housing 100, so that when the front panel is detached, the hard disk 325 can be inserted into the mounting unit 320. Preferably, it is not the end user who is able to change the configuration of the electronic system, but the car dealer.

Summarizing, the electronic system of the invention provides an effective cooling of the different components comprised in the vehicle. The use of air coming from the passenger compartment can be avoided to a great extent, as the air inlet and the air outlet are situated in the space separated from the passenger compartment by the support structure carrying the electronic system. Additionally, the openings for supplying air and for removing the air are arranged in such a way, that the electronic components needing cooling air are accommodated in the airflow, whereas other electronic components, where cooling air is not needed, such as a CD reader, is accommodated in a portion of the housing which is not vented by the cooling air.

## Claims

1. Electronic built-in system for installation in a support structure mounted in a passenger compartment of a vehicle, the system comprising:
- at least one electronic module (330-350),
- a housing (100) for receiving said at least one electronic module, the housing (100) being mounted to the support structure of the vehicle comprises a front control panel (110) with operating elements for operating the electronic system, the front control panel (110) facing the passenger compartment,
- a cooling unit (370) provided in the housing which is guiding cooling air through the housing for cooling said at least one electronic module,
- at least one first opening (140) provided in a outer wall portion of the housing (100) for supplying cooling air to the housing,
- at least one second opening (380) provided in an outer wall portion of the housing for removing the cooling air from the housing,
wherein said at least first and said at least second openings (140, 380) are arranged at different wall portions of the housing (100), the different wall portions being separated from the passenger compartment by the support structure when the built in system is installed in the support structure.

2. Electronic built -in system according to claim 1, wherein the first and the second openings (140, 380) are arranged at opposite wall portions of the housing.

3. Electronic built-in system according to claim 1 or 2, wherein the first and the second openings (140, 380) are arranged on respective side walls of the housing.

4. Electronic built-in system according to any of the preceding claims, wherein the cooling unit (370) comprises a ventilator situated next to the second openings for removing the cooling air.

5. Electronic built-in system according to any of the preceding claims, wherein the first and the second openings (140, 380) are arranged on the lower portions of the respective side walls of the housing.

6. Electronic built-in system according to any of the preceding claims, **characterized by** further comprising at least one of a radio module, an audio module, a navigation module, a telecommunication module and a storage medium reading module.

7. Electronic built-in system according to claim 6, wherein at least one of the radio module, the audio module, the navigation module, the telecommunication module is arranged in the lower part of the housing (100), whereas the storage medium reading module is arranged in the upper part of the housing.

8. Electronic built-in system according to any of the preceding claims, wherein the cooling unit comprises cooling fins.

9. Electronic built-in system according to claim 8, wherein the ventilator is arranged next to the wall portion comprising the second openings for removing the cooling air from the housing, with the cooling fins being interposed between the said wall portion and the ventilator.

10. Electronic built in system according to any of the preceding claims, wherein the support structure is a console.

11. Electronic built-in system of a vehicle comprising
- a housing 100) for receiving several electronic modules, the modules comprising heat generating modules and at least one optical read module for reading out data from a removable storage medium (113),
- a cooling unit (370) for guiding cooling air through the housing for cooling the electronic modules,
- first openings (140) provided in an outer wall portion of the housing for supplying cooling air to the housing,
- second openings (380) provided in an outer wall portion of the housing for removing the cooling air from the housing, wherein the first and the second openings are arranged at the housing in such a position, that the cooling air on its way from the first openings to the second openings is predominately guided along the heat generating modules.

12. Electronic built in system according to claim 11, wherein the first and the second openings (140, 380) are arranged on opposite wall portions of the housing.

13. Electronic built in system according to claim 11 or 12, wherein the first and the second openings (140, 380) are both arranged at the lower parts of side walls of the housing.

14. Electronic built in system according to any of claims 11 to 13, wherein the heat generating modules are arranged inside the housing in a lower part of the housing (100), whereas the optical read module is arranged in a upper part of the housing (100).

15. Electronic built in system according to any of claims 11 to 14, wherein the cooling unit (370) comprises a ventilator arranged next to the second openings for removing the cooling air from the housing.

16. Electronic built-in system according to claim 15, wherein the cooling unit comprises cooling fins (420) which are arranged between the wall portion comprising the second openings and the ventilator.

17. Electronic built in system according to any of claims 11 to 16, further comprising a mounting unit (320) for receiving a hard disk in the electronic built in system.

18. Electronic built in system according to claim 17, wherein the mounting unit (320) for receiving the hard disk is arranged in the lower part of the housing.

19. Electronic built in system according to any of claims 11 to 18, **characterized by** further comprising a detachable front control panel (110).

20. Electronic built in system according to claim 19, wherein the hard disk can be mounted to the mounting unit (320) with the front control panel (110) being detached.

21. Electronic built in system according to any of the preceding claims, **characterized by** further comprising a mother printed circuit board (310) which is arranged at the bottom of the housing.

22. Electronic built in system according to any of the preceding claims, wherein the housing (100) is a 2 DIN housing, fitting in a 2 DIN recess of the support structure.

23. Navigation system comprising an electronic built in system according to any of the preceding claims.
